# EUROPÄISCHE PATENTSCHRIFT

(11) **EP 2 489 527 B1**
(45) Veröffentlichungstag und Bekanntmachung des Hinweises auf die Patenterteilung: **16.10.2013**
(21) Anmeldenummer: 12150877.4
(22) Anmeldetag: 12.01.2012
(51) Int. Cl.: B60C 11/12, B60C 11/04

(54) **Laufstreifenprofil eines Fahrzeugluftreifens**
Run strip profile of a vehicle tyre
Profil de bande de roulement d'un bandage pneumatique de véhicule

(30) Priorität: 21.02.2011 DE 102011000851
(43) Veröffentlichungstag der Anmeldung: 22.08.2012
(73) Patentinhaber: Continental Reifen Deutschland GmbH, 30165 Hannover (DE)
(72) Erfinder: Rittweger, Stefan, 30163 Hannover (DE)
(74) Vertreter: Finger, Karsten

(56) Entgegenhaltungen:
- GB-A- 546 975
- US-A- 2 972 368

## Beschreibung

Die Erfindung betrifft ein Laufstreifenprofil eines Fahrzeugluftreifens mit über den Umfang des Fahrzeugluftreifens erstreckten Profilbändern aus einem über den Umfang des Fahrzeugluftreifens erstreckten radial erhabenen Profilbandabschnitt oder aus mehreren in Umfangsrichtung U des Fahrzeugluftreifens hintereinander angeordneten, über den Umfang des Fahrzeugluftreifens verteilt von angeordneten radial erhabenen Profilbandabschnitten , wobei die Profilbänder in axialer Richtung A des Fahrzeugluftreifens von über den Umfang des Fahrzeugluftreifens erstreckten Umfangsrillen von einander beabstandet und in radialer Richtung R nach außen mit einer die Bodenkontaktoberfläche bildenden radial äußeren Oberfläche ausgebildet sind.

Derartige Fahrzeugluftreifen sind bekannt. So sind beispielsweise Fahrzeugluftreifen bekannt, mit über den gesamten Umfang des Fahrzeugluftreifens erstreckten Profilrippen. Derartige Profilrippen ermöglichen eine hohe Umfangssteifigkeit des Fahrzeugluftreifens, wodurch die Trockenbremseigenschaften und Trockenbeschleunigungseigenschaften des Fahrzeugluftreifens begünstigt werden. Die Umfangsrippen wirken jedoch aufgrund ihrer hohen Biegesteifigkeit um Achsparallelen des Fahrzeugluftreifens auch beim Durchlaufen des Reifenlatsches den gewünschten Anpassungen der Reifenoberfläche entgegen, was einen erhöhten Rollwiderstand begünstigt.

Es sind auch Fahrzeugluftreifen bekannt, mit über den gesamten Umfang des Fahrzeugluftreifens erstreckten Profilblockreihen. Profilblockreihen mit einer Vielzahl von kürzeren Profilblockelementen, die jeweils durch Querrillen voneinander getrennt sind, ermöglichen aufgrund der hohen Biegefähigkeit um Achsparallelen des Fahrzeugluftreifens ein rollwiderstandsgünstiges Durchlaufen des Reifenlatsches, allerdings bei reduzierter Umfangssteifigkeit, wodurch die Trockenbrems- und Trockenbeschleunigungseigenschaften beeinträchtigt werden. Es ist auch bekannt, Profilblockreihen mit in Umfangsrichtung langen Profilblockelementen auszubilden, wodurch die Umfangssteifigkeit der Profilblockreihe etwas erhöht wird, aber unter Erhöhung der Biegesteifigkeit um Achsparallelen des Fahrzeugluftreifens und somit Inkaufnahme einer Erhöhung des Rollwiderstandes.

Es ist auch bekannt, Profilrippen oder in Umfangsrichtung erstreckte Profilblockelemente mit langer Erstreckungslänge mit zusätzlichen Feineinschnitten auszubilden, die sich quer zur Umfangsrichtung über die gesamte Breite der Profilrippe bzw. des Profilblockelementes erstrecken. Hierdurch wird zwar die Umfangssteifigkeit der Profilrippe bzw. des Profilblockelementes in relativ großem Umfang erhalten und die Flexibilität der Profilrippe bzw. des Profilblockelementes und die Biegesteifigkeit um Achsparallelen des Fahrzeugluftreifens etwas abgesenkt. Der Rollwiderstand kann hierdurch etwas reduziert werden. Das Öffnen und Schließen derartiger tiefer Feineinschnitte beim Durchlaufen des Reifenlatsches kann jedoch eine erhöhte Geräuschbildung zur Folge haben.

Aus der GB 546975 ist ein Laufstreifenprofil eines Reifens gemäß den Merkmalen des Oberbegriffs des Anspruchs 1 bekannt.

Der Erfindung liegt daher die Aufgabe zugrunde, bei derartigen Fahrleugluftreifen mit einfachen Mitteln unter Nutzung der Vorteile der hohen Umfangssteifigkeit von radial erhabenen Profilbandelementen von großer Umfangserstreckungslänge reduzierten Rollwiderstand bei geringer Geräuschbildung zu ermöglichen.

Die Aufgabe wird erfindungsgemäß durch die Ausbildung eines Laufstreifenprofils eines Fahrzeugluftreifens mit über den Umfang des Fahrzeugluftreifens erstreckten Profilbändern aus einem über den Umfang des Fahrzeugluftreifens erstreckten radial erhabenen Profilbandabschnitt oder aus mehreren in Umfangsrichtung U des Fahrzeugluftreifens hintereinander angeordneten, über den Umfang des Fahrzeugluftreifens verteilt von angeordneten radial erhabenen Profilbandabschnitten, wobei die Profilbänder in axialer Richtung A des Fahrzeugluftreifens von über den Umfang des Fahrzeugluftreifens erstreckten Umfangsrillen von einander beabstandet und in radialer Richtung R nach außen mit einer die Bodenkontaktoberfläche bildenden radial äußeren Oberfläche ausgebildet sind, wobei der Profilbandabschnitt in wenigstens einem Profilband mit längs seiner Umfangserstreckung verteilten und in Umfangsrichtung U voneinander beabstandeten Abschnitten mit jeweils mehreren in axialer Richtung A in der radial äußeren Oberfläche nebeneinander angeordneten Feineinschnitten ausgebildet ist, wobei die in Umfangsrichtung U des Fahrzeugluftreifens ausgebildete Richtungskomponente der Haupterstreckungsrichtung der Feineinschnitte jeweils größer ist als die in axialer Richtung A ausgebildete Richtungskomponente, gemäß den Merkmalen von Anspruch 1 gelöst, wobei in einem mit den axial nebeneinander angeordneten Feineinschnitten ausgebildeten Abschnitt in der radial äußeren Oberfläche zusätzlich eine quer zum Profilband innerhalb der Bodenaufstandsbreite des Fahrzeugluftreifens über die gesamte Breite des Profilbandes erstreckte - insbesondere geradlinige - Nut ausgebildet ist, die die axial nebeneinander angeordneten Feineinschnitte schneidet, wobei die Nut mit einer in radialer Richtung R des Reifens ausgebildeten Tiefe ausgebildet ist, die maximal halb so groß wie die Tiefe der Feineinschnitten ist.

Durch diese Ausbildung wird ermöglicht, dass auch längere in Umfangsrichtung erstreckte, radial erhabene Profilbandelemente in den Abschnitten mit axial nebeneinander angeordneten Feineinschnitten in ihrer Biegesteifigkeit um die Achsparallelen des Fahrzeugluftreifens reduziert werden und dass somit eine Flexibilität ermöglicht wird, die ein Durchlaufen des Reifenlatsches mit reduziertem Widerstand gegen die Verbiegung ermöglicht wird. Hierdurch wird der durch das Profilbandelement erzeugte Rollwiderstand und somit der Rollwiderstand des Reifens reduziert. Das Profilbandelement wird dabei in seiner Umfangssteifigkeit kaum beeinträchtigt, so dass die Trockenbrems- und Trockenbeschleunigungseigenschaften auf hohem Niveau erhalten bleiben ohne Geräuschentstehung durch sich öffnende und schließende tief ausgebildete quer verlaufende Feineinschnitte. Durch die Nut kann die Gelenkwirkung für Rollwiderstand weiter verbessert werden und aufgrund der Tiefenbegrenzung bei nur geringfügiger Einbuße der Steifigkeit. Hierdurch kann somit ein optimaler Kompromiss von gutem Rollwiderstand und Steifigkeit eingestellt werden. Zusätzlich bewirkt die Nut eine Entlüftung bei weiterer Reduktion der Geräuschentstehung.

Besonders vorteilhaft ist die Ausbildung eines Fahrzeugluftreifens gemäß den Merkmalen von Anspruch 2, wobei die Feineinschnitte geradlinig - insbesondere in Umfangsrichtung U - erstreckt ausgebildet sind. Die Ausbildung begünstigt einen für gute Rollwiderstandseigenschaften günstigen Gelenkeffekt. Bei Erstreckung in Umfangsrichtung kommt die Funktion der Erfindung optimal zum Tragen, da hier die Stabilität beim Bremsen optimiert werden kann. Darüber hinaus kann vermieden werden, dass durch Feineinschnitte erzeugte Kanten beim Einlauf in den Footprint-Bereich aufschlagen, wodurch Geräuschbildung besonders wirksam vermieden werden kann. Besonders vorteilhaft ist die Ausbildung eines Fahrzeugluftreifens gemäß den Merkmalen von Anspruch 3, wobei in wenigstens zwei axial benachbarten Profilbändern derartige in Umfangsrichtung U beabstandete Abschnitte mit jeweils in axialer Richtung nebeneinander angeordneten Feineinschnitten ausgebildet sind, wobei die Abschnitte der beiden Profilbänder zueinander jeweils in Umfangsrichtung - insbesondere ohne Überschneidung - versetzt zueinander positioniert sind. Hierdurch kann bei weiterer Verbesserung des Rollwiderstandes die Geräuschbildung zusätzlich durch den Versatz verbessert werden.

Besonders vorteilhaft zur Umsetzung der Erfindung insbesondere bei PKW-Reifen ist die Ausbildung eines Fahrzeugluftreifens gemäß den Merkmalen von Anspruch 4, wobei die axial nebeneinander angeordneten Feineinschnitte jeweils mit einer - insbesondere gleich groß - ausgebildeten Länge L mit 3mm≤L≤8mm und mit einer - insbesondere gleich groß - ausgebildeten Breite d mit 0,4mm≤d≤1mm ausgebildet sind.

Besonders vorteilhaft zur Umsetzung der Erfindung insbesondere bei PKW-Reifen ist die Ausbildung eines Fahrzeugluftreifens gemäß den Merkmalen von Anspruch 5, wobei die axial benachbarten nebeneinander angeordneten Feineinschnitte jeweils zumindest in der radial äußeren Oberfläche mit einem - insbesondere gleich großen - Abstand a zueinander angeordnet sind mit 2mm≤a≤6mm.

Besonders vorteilhaft ist die Ausbildung eines Fahrzeugluftreifens gemäß den Merkmalen von Anspruch **6**, wobei die in Umfangsrichtung U benachbarten hintereinander angeordneten mit axial nebeneinander angeordneten Feineinschnitten ausgebildeten Abschnitte eines radial erhabenen Profilbandabschnitts jeweils mit einem in Umfangsrichtung U gemessenen Abstand s zueinander angeordnet sind mit 15mm≤s≤25mm. Der Abstand entspricht weitgehend den Abständen von Querrillen in PKW-Reifen. Die Gelenkwirkung zur Erreichung guter Rollwiderstandseigenschaften kann hierdurch optimiert eingestellt werden.

Besonders vorteilhaft zur gezielten Einstellung der Steifigkeit ist die Ausbildung eines Fahrzeugluftreifens gemäß den Merkmalen von Anspruch **7**, wobei der Abschnitt sich in Umfangsrichtung zwischen zwei quer zur Umfangsrichtung erstreckten Linien erstreckt, wobei die axial nebeneinander angeordneten Feineinschnitte eines Abschnittes mit ihrem einen Erstreckungsende auf der einen und mit ihrem anderen Erstreckungsende auf der anderen Linie enden.

Besonders vorteilhaft zur gezielten Einstellung der Steifigkeit ist die Ausbildung eines Fahrzeugluftreifens gemäß den Merkmalen von Anspruch **8**, wobei die beiden Linien geradlinig, parallel zueinander und unter einem Neigungswinkel α zur Umfangsrichtung U verlaufend ausgebildet sind mit 45°<α<135° - insbesondere mit α=90°. Darüber hinaus ist hierdurch ein gezieltes Einrollen in den Footprint zur optimierten Geräuschreduktion einstellbar.

Besonders vorteilhaft ist die Ausbildung eines Fahrzeugluftreifens gemäß den Merkmalen von Anspruch **9**, wobei die beiden Linien innerhalb der Bodenaufstandsbreite jeweils ausgehend von den beiden axialen Rändern des Profilbandes in axialer Richtung zur Mitte hin mit zunehmendem Abstand zueinander ausgebildet sind. Hierdurch ist eine gezielte individuelle Einstellung der Steifigkeit möglich, mit Einstellung gezielter Weichheit an den Stellen des Profilbandes, wo es für die gewünschte Gelenkwirkung besonders wichtig ist.

Besonders vorteilhaft ist die Ausbildung eines Fahrzeugluftreifens gemäß den Merkmalen von Anspruch **10**, wobei im Bereich der axialen Mitte des Profilbandes wenigstens ein durch die Linien begrenzter Feineinschnitt aus zwei unmittelbar in Umfangsrichtung hintereinander ausgebildeten unterbrochenen Teilfeineinschnitten und zumindest die in axialer Richtung beiderseits der Mitte äußeren Feineinschnitte jeweils aus einem ununterbrochenen Feineinschnitt ausgebildet sind. Hierdurch ist eine gezielte individuelle Einstellung der Steifigkeit möglich, mit Einstellung gezielter Weichheit an den Stellen des Profilbandes, wo es für die gewünschte Gelenkwirkung besonders wichtig ist.

Besonders vorteilhaft ist die Ausbildung eines Fahrzeugluftreifens gemäß den Merkmalen von Anspruch **11**, wobei die Feineinschnitte längs ihrer radialen Erstreckung nach innen mit einer abnehmenden Länge L ausgebildet sind. Hierdurch ist eine gezielte individuelle Einstellung der Steifigkeit möglich, mit Einstellung gezielter Weichheit an den Stellen des Profilbandes, wo es für die gewünschte Gelenkwirkung besonders wichtig ist.

Besonders vorteilhaft ist die Ausbildung eines Fahrzeugluftreifens gemäß den Merkmalen von Anspruch **12**, wobei im Abschnitt jeweils N Feineinschnitte in axialer Richtung A nebeneinander ausgebildet sind mit 5 ≤ N ≤ 8. Diese Ausbildung ist die für ein PKW-Reifen-Profil optimierte Ausbildung.

Die Erfindung wird im Folgenden an Hand der in den Figuren 1 bis 11 dargestellten Ausführungsbeispiele näher erläutert. Hierin zeigen
- Fig.1: eine Draufsicht auf einen Abschnitt eines Laufstreifenprofiles eines PKW-Fahrzeugluftreifens,
- Fig.2: das Laufstreifenprofil von Fig.1 in Schnittdarstellung gemäß Schnitt II-II von Fig.1,
- Fig.3: das Laufstreifenprofil von Fig.1 in Schnittdarstellung gemäß Schnitt III-III von Fig.1,
- Fig.4: eine Draufsicht auf einen Abschnitt eines Laufstreifenprofiles eines PKW-Fahrzeugluftreifens von Fig. 1 in alternativer Ausbildung,
- Fig.5: das Laufstreifenprofil von Fig.4 in Schnittdarstellung gemäß Schnitt V-V von Fig.4,
- Fig.6: eine Draufsicht auf einen Abschnitt eines Laufstreifenprofiles eines PKW-Fahrzeugluftreifens von Fig. 1 in weiterer alternativer Ausbildung,
- Fig.7: das Laufstreifenprofil von Fig.6 in Schnittdarstellung gemäß Schnitt VII-VII von Fig.6,
- Fig.8: eine Draufsicht auf einen Abschnitt eines Laufstreifenprofiles eines PKW-Fahrzeugluftreifens von Fig. 1 in weiterer alternativer Ausbildung,
- Fig.9: das Laufstreifenprofil von Fig.8 in Schnittdarstellung gemäß Schnitt IX-IX von Fig.8,
- Fig.10: eine Draufsicht auf einen Abschnitt eines Laufstreifenprofiles eines PKW-Fahrzeugluftreifens von Fig. 1 in weiterer alternativer Ausbildung,
- Fig.11: das Laufstreifenprofil von Fig.10 in Schnittdarstellung gemäß Schnitt XI-XI von Fig.10.

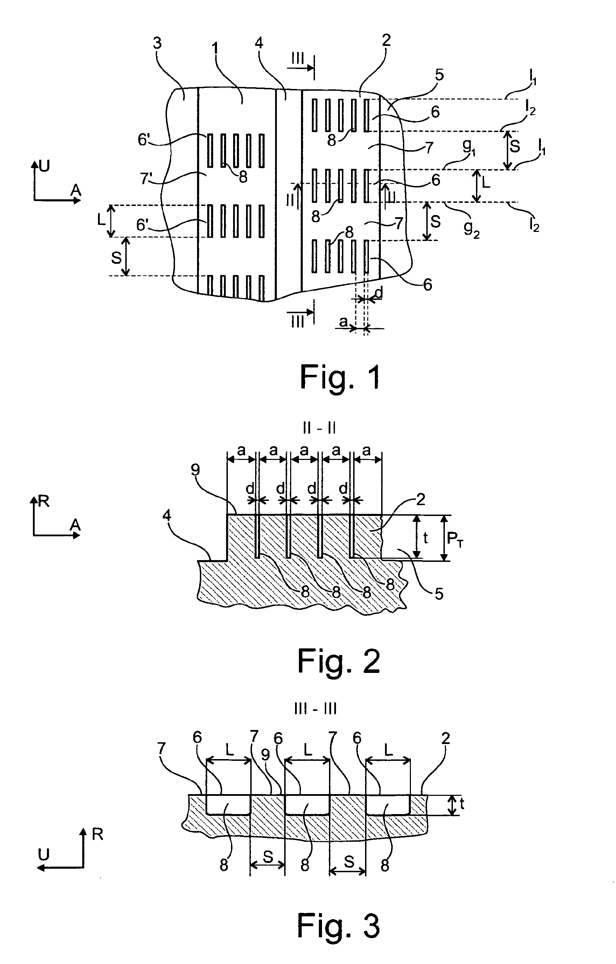

Die Figuren 1, 2 und 3 zeigen einen Laufstreifenabschnitt eines Fahrzeugluftreifens mit zwei in axialer Richtung A des Fahrzeugluftreifens nebeneinander angeordneten über den gesamten Umfang des Fahrzeugluftreifens erstreckten und in Umfangsrichtung U ausgerichteten Profilrippen 1 und 2. Die Profilrippe 1 ist in axialer Richtung A des Fahrzeugluftreifens zu der von der Profilrippe 2 weggewandten Seite hin von einer über den gesamten Umfang des Fahrzeugluftreifens erstreckten und in Umfangsrichtung U ausgerichteten Umfangsrille 3 und in axialer Richtung A zu der zur Umfangsrippe 2 hinweisenden Seite durch eine über den gesamten Umfang des Fahrzeugluftreifens erstreckten und in Umfangsrichtung U ausgerichteten Umfangsrille 4 begrenzt. Die Profilrippe 2 ist in axialer Richtung A zu der Profilrippe 1 hinweisenden Seite durch die Umfangsrille 4 und in axialer Richtung A zu der von der Umfangsrippe 1 wegweisenden Seite von einer über den gesamten Umfang des Fahrzeugluftreifens erstreckten und in Umfangsrichtung U ausgerichteten Umfangsrille 5 begrenzt. Die Profilrippen 1 und 2 sind jeweils in radialer Richtung R des Fahrzeugluftreifens außen durch eine die Bodenkontaktoberfläche bildende radial äußere Oberfläche 9 begrenzt. Die Profilrippe 2 ist über den Umfang des Fahrzeugluftreifens hinweg aus in Umfangsrichtung U des Fahrzeugluftreifens in alternierender Abfolge hintereinander angeordneten Umfangsabschnitten 6 und Umfangsabschnitten 7 ausgebildet.

Die Umfangsabschnitte 6 erstrecken sich in Umfangsrichtung U jeweils zwischen einer den Umfangsabschnitt in die eine Umfangserstreckungsrichtung - in Fig. 1 nach oben hin dargestellt - begrenzenden ersten Linie l₁ und einer den Umfangsabschnitt in die andere Umfangserstreckungsrichtung - in Fig. 1 nach unten hin dargestellt - begrenzenden zweiten Linie l₂. Die Linien l₁ und l₂ erstrecken sich über die gesamte Breite der Umfangsrippe 2 von Umfangsrille 4 bis zur Umfangsrille 5 und trennen den jeweiligen Erstreckungsabschnitt 6 von dem in Umfangsrichtung U jeweils angrenzenden Abschnitt 7.

Im Abschnitt 6 sind in axialer Richtung A des Fahrzeugluftreifens N - mit 5≤N≤8 - nebeneinander angeordnete parallele geradlinige in Umfangsrichtung U ausgerichtete Feineinschnitte 8 ausgebildet, welche sich jeweils ausgehend von der Linie l₂ bis zur Linie l₁ erstrecken. Die Feineinschnitte 8 sind jeweils mit einer Erstreckungslänge L - gemessen in der radial äußeren Oberfläche 9 und mit einer quer zur Längserstreckung gemessenen Breite d ausgebildet. Der Abstand zwischen zwei benachbarten parallelen Feineinschnitten 8 ist jeweils a, wobei a in der radial äußeren Oberfläche 9 bemessen ist. Ebenso ist der Abstand zwischen dem zur Umfangsrille 4 nächstgelegenen Feineinschnitt 8 und der Umfangsrille 4 in der radial äußeren Oberfläche 9 gleich dem Abstand a und der Abstand zwischen dem zur Umfangsrille 5 nächstgelegenen Feineinschnitt 8 und der Umfangsrille 5 ist ebenfalls in der radial äußeren Oberfläche 9 gleich dem Abstand a.

Die Länge L der Feineinschnitte 8, die Breiten d der Feineinschnitte 8 und die Abstände a zwischen den Feineinschnitten 8 sind mit 3mm ≤ L ≤ 8mm und 0,4 mm ≤ d ≤ 1mm und mit 2mm ≤ a ≤ 6mm ausgebildet. Die Feineinschnitte 8 sind mit einer in radialer Richtung R ausgehend von der radial äußeren Oberfläche 9 gemessenen Tiefe t ausgebildet mit (0,5P_{T})≤ t ≤ P_{T}, wobei P_{T} die maximale in den benachbarten Umfangsrillen 4 und 5 gemessen Profiltiefe angibt.

In dem in den Figuren 1,2 und 3 dargestellten Ausführungsbeispiel ist N = 5 gewählt.

Die Feineinschnitte 8 eines Abschnittes 6 sind jeweils gleich breit ausgebildet. Die Feineinschnitte 8 eines Abschnittes sind jeweils gleich tief ausgebildet.

Die Abschnitte 7 der Profilrippe 2 sind jeweils frei von Feineinschnitten ausgebildet. Der in Umfangsrichtung U gemessene Abstand s zwischen den in Umfangsrichtung hintereinander angeordneten Abschnitten 6 ist mit 15mm ≤ s ≤ 25mm gewählt.

In dem in den Figuren 1, 2 und 3 dargestellten Ausführungsbeispiel ist die Linie l₁ als Gerade g₁ und die Linie l₂ als Gerade g₂ ausgebildet.

In dem in den Figuren 1,2 und 3 dargestellten Ausführungsbeispiel sind die Geraden g₁ und g₂ dabei unter Einschluss eines Winkels α = 90° zur Umfangsrichtung U ausgerichtet und alle Feineinschnitte 8 eines Abschnitts 6 sind jeweils mit gleicher Länge L ausgebildet.

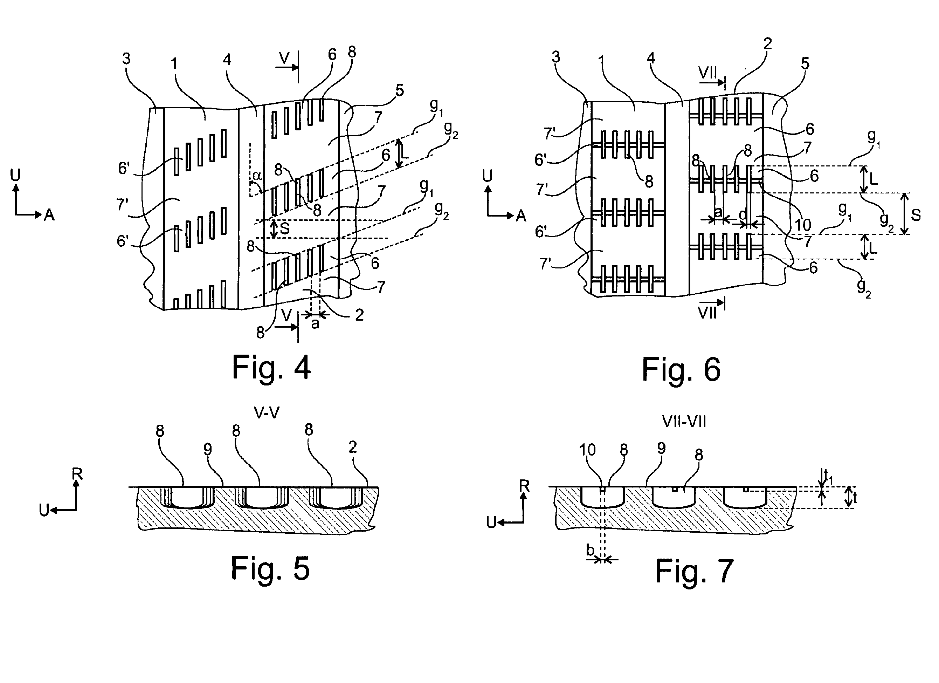

Die Figuren 4 und 5 zeigen ein Ausführungsbeispiel, bei dem - wie in den Figuren 1 bis 3 dargestellt - die Linien l₁ und l₂ als parallele Geraden g₁ und g₂ ausgebildet sind. In dem in den Figuren 4 und 5 dargestellten Ausführungsbeispiel sind die Geraden g₁ und g₂ jedoch unter Einschluss eines Winkels α mit 45° < α < 135° ausgebildet, wobei im konkret dargestellten Ausführungsbeispiel α = 80° gewählt ist.

In diesem Ausführungsbeispiel bemisst sich die Abstandsgröße s zwischen der Geraden g₂ des einen Abschnitts 6 und der nächstgelegenen Geraden g₁ des nächsten Abschnitts 6 aus den in Umfangsrichtung U gemessenen Abstand zwischen dem in der radial äußeren Oberfläche 9 ausgebildeten Schnittpunkt der Gerade g₁ mit der die Profilrippe 2 zur Umfangsrille 5 hin begrenzenden Flanke und dem Schnittpunkt der Geraden g₂ mit der die Profilrippe 2 zur Umfangsrille 4 hin begrenzenden Flanke.

Fig. 6 und 7 zeigen ein Ausführungsbeispiel, bei dem jeweils in der radial äußeren Oberfläche 9 der Profilrippe 2 zur Entlüftung eine zusätzliche Quernut 10 ausgebildet ist, die sich in axialer Richtung A des Fahrzeugluftreifens ausgehend von der Umfangsrille 4 bis in die Umfangsrille 5 hindurch erstreckt und dabei jeweils die axial nebeneinander angeordneten Feineinschnitte 8 mittig schneidet. Die Quernut 10 ist dabei mit einer in radialer Richtung R ausgehend von der radial äußeren Oberfläche 9 gemessenen maximalen Tiefe t₁ ausgebildet mit t₁ ≤ (0,5t) und mit einer Nutbreite b mit 1mm≤b≤3mm und mit b ≤ L/2.

In den Figuren 1, 4 und 6 ist jeweils auch ein Ausführungsbeispiel dargestellt, in welchem auch die Profilrippe 1 mit einer der alternierenden Abfolge der Abschnitte 6 und 7 der Profilrippe 2 analog ausgebildeten alternierenden Abfolge von Abschnitten 6' und 7' ausgebildet ist, wobei die Abschnitte 6' in der Profilrippe 1 in Analogie zu den Abschnitten 6 der Profilrippe 2 diejenigen Abschnitte sind, in denen die in axialer Richtung A nebeneinander angeordneten Feineinschnitte 8 ausgebildet sind, und wobei die Abschnitte 7' in Analogie zu den Abschnitten 7 der Profilrippe 2 diejenigen Abschnitte sind, in denen keine Feineinschnitte ausgebildet sind. In den in den Figuren 1,4 und 6 dargestellten Ausführungsbeispielen sind jeweils die mit Feineinschnitten 8 ausgebildeten Abschnitte 6' der Profilrippe 1 in Umfangsrichtung U versetzt zu den Abschnitten 6 der Profilrippen 2 ausgebildet.

In den Figuren 1 und 6 sind dabei Abschnitte 6' der Profilrippe 1 jeweils in einem Umfangserstreckungsabschnitt zwischen zwei benachbarten Abschnitten 6 der Profilrippe 2 ausgebildet. Ebenso ist jeweils ein Abschnitt 6 der Profilrippe 2 zwischen zwei in Umfangsrichtung benachbarten Abschnitten 6' der Profilrippe 1 ausgebildet.

In Fig.4 ist ein Ausführungsbeispiel dargestellt, bei dem sich der Abschnitt 6' der Profilrippe 1 jeweils bis in den Umfangserstreckungsbereich eines benachbarten Abschnitts 6 der Profilrippe 2 hinein erstreckt.

In Fig. 5 ist ein Ausführungsbeispiel dargestellt, bei dem die Gerade g₁ des Erstreckungsabschnitts 6 der Profilrippe 2 und die Gerade g₂ des Erstreckungsabschnitts 6 der Profilrippe 2 in axialer Fortführung jeweils den Erstreckungsabschnitt 6' in Umfangsrichtung U begrenzen.

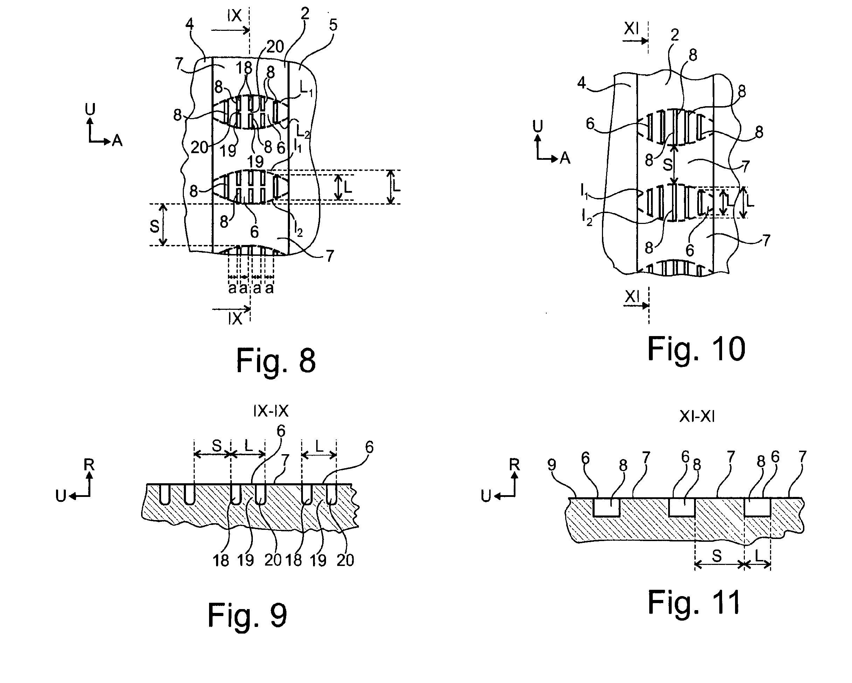

In den Figuren 10 und 11 ist ein Ausführungsbeispiel dargestellt, bei welchem die Linien l₁ und l₂ jeweils gekrümmt ausgebildet sind, wobei beide Linien jeweils in Richtung zu dem mit den Feineinschnitten 8 ausgebildeten jeweiligen Abschnitt 6 hin gekrümmt ausgebildet sind, so dass die Linien l₁ und l₂ eine doppelkonvexe bzw. eine linsenförmige Kontur des Abschnitts 6 bilden. Die Länge L der axial benachbarten Feineinschnitte 8 des Abschnitts 6 ist hierdurch unterschiedlich ausgebildet. Dabei ist jeweils der zur Umfangsrille 4 hin und der zur Umfangsrille 5 hin nächstliegende Feineinschnitt 8 mit der kürzesten Erstreckungslänge L ausgebildet und ausgehend von diesen beiden Feineinschnitten 8 zur axialen Mitte der Profilrippe 2 hin nimmt die Erstreckungslänge L der Feineinschnitte 8 von einem Feineinschnitt 8 zum nächsten Feineinschnitt 8 degressiv zu. Der mittlere Feineinschnitt 8 ist mit der größten Erstreckungslänge L ausgebildet. Der Abstand s zwischen den in Umfangsrichtung U hintereinander angeordneten Abschnitten 6 bemisst sich in diesem Fall als Abstand zwischen den mittleren Feineinschnitten 8 der beiden Abschnitte.

Die Figuren 8 und 9 zeigen ein weiteres Ausführungsbeispiel, das - wie das in den Figuren 10 und 11 dargestellte Ausführungsbeispiel ausgebildet ist - wobei jedoch die mittleren Feineinschnitte 8 jeweils aus zwei in Umfangsrichtung U lediglich durch eine kurze in in Umfangsrichtung U ausgebildete Unterbrechung 19 voneinander getrennten, in der radial äußeren Oberfläche 9 kolinearen Teilfeineinschnitten 18 und 20 ausgebildet sind. Die axial äußeren, jeweils der Umfangsrille 4 und 5 unmittelbar benachbarten Feineinschnitte 8 des Abschnitts 6 sind auch in diesem Ausführungsbeispiel aus einem einzigen, ununterbrochenen Feineinschnitt 8 ausgebildet.

In den oben dargestellten Ausführungsbeispielen ist - wie in den Figuren 3, 5, 7, 9 und 11 dargestellt ist - die Erstreckungslänge L der Feineinschnitte 8 über ihre gesamte in radialer Richtung R ausgebildete Erstreckungstiefe t im Wesentlichen mit gleicher Erstreckungslänge L ausgebildet. In anderer, nicht dargestellter Ausführung, sind zumindest ein Teil der Feineinschnitte 8 über ihre Erstreckung in radialer Richtung R hinweg nach radial innen hin mit stetig abnehmender Länge L ausgebildet.

Bei den oben dargestellten Ausführungsbeispielen sind die Feineinschnitte 8 über ihre gesamte radiale Erstreckung mit im Wesentlichen konstanter Breite d ausgebildet. In anderer, nicht dargestellter Ausführung sind die Feineinschnitte über ihre radiale Erstreckung nach radial innen hin mit abnehmender Breite b ausgebildet.

Auch wenn in den oben genannten Ausführungsbeispielen die Erfindung lediglich im Zusammenhang mit Profilrippen beschrieben, dargestellt und erläutert wurde, ist in einer nicht dargestellten Ausführungen die Ausbildung dieser alternierenden Abschnitte 6 und 7 bei Profilbändern mit längeren Profilblockelementen eingesetzt, bei dem jeweils in der radial äußeren Oberfläche des jeweiligen Profilblockelementes in Umfangsrichtung U gesehen hintereinander in analoger Weise Abschnitte 6 und 7 in alternierender Reihenfolge ausgebildet werden.

### Bezugszeichenliste

### (Teil der Beschreibung)

- 1: Profilrippe
- 2: Profilrippe
- 3: Umfangsrille
- 4: Umfangsrille
- 5: Umfangsrille
- 6: Abschnitt
- 7: Abschnitt
- 8: Feineinschnitt
- 9: Radial äußere Oberfläche
- 10: Nut
- 11:
- 12:
- 13:
- 14:
- 15:
- 16:
- 17:
- 18: Teilfeineinschnitt
- 19: Teilfeineinschnitt
- 20: Unterbrechung

## Patentansprüche

1. Laufstreifenprofil eines Fahrzeugluftreifens mit über den Umfang des Fahrzeugluftreifens erstreckten Profilbändern (1,2) aus einem über den Umfang des Fahrzeugluftreifens erstreckten radial erhabenen Profilbandabschnitt (1,2) oder aus mehreren in Umfangsrichtung U des Fahrzeugluftreifens hintereinander angeordneten, über den Umfang des Fahrzeugluftreifens verteilt von angeordneten radial erhabenen Profilbandabschnitten , wobei die Profilbänder (1,2) in axialer Richtung A des Fahrzeugluftreifens von über den Umfang des Fahrzeugluftreifens erstreckten Umfangsrillen (3,4,5) von einander beabstandet und in radialer Richtung R nach außen mit einer die Bodenkontaktoberfläche bildenden radial äußeren Oberfläche (9) ausgebildet sind, wobei der Profilbandabschnitt in wenigstens einem Profilband (2) mit längs seiner Umfangserstreckung verteilten und in Umfangsrichtung U voneinander beabstandeten Abschnitten (6) mit jeweils mehreren in axialer Richtung A in der radial äußeren Oberfläche nebeneinander angeordneten Feineinschnitten (8) ausgebildet ist, wobei die in Umfangsrichtung U des Fahrzeugluftreifens ausgebildete Richtungskomponente der Haupterstreckungsrichtung der Feineinschnitte jeweils größer ist als die in axialer Richtung A ausgebildete Richtungskomponente
**dadurch gekennzeichnet,**
**dass** in einem mit den axial nebeneinander angeordneten Feineinschnitten (8) ausgebildeten Abschnitt (6) in der radial äußeren Oberfläche (9) zusätzlich eine quer zum Profilband (2) innerhalb der Bodenaufstandsbreite des Fahrzeugluftreifens über die gesamte Breite des Profilbandes (2) erstreckte - insbesondere geradlinige - Nut (10) ausgebildet ist, die die axial nebeneinander angeordneten Feineinschnitte (8) schneidet, wobei die Nut (10) mit einer in radialer Richtung R des Reifens ausgebildeten Tiefe t₁ ausgebildet ist, die maximal halb so groß wie die Tiefe t der Feineinschnitte ist.

2. Laufstreifenprofil gemäß den Merkmalen von Anspruch 1,
wobei die Feineinschnitte (8) geradlinig - insbesondere in Umfangsrichtung U - erstreckt ausgebildet sind.

3. Laufstreifenprofil gemäß den Merkmalen von einem oder mehreren der vorangegangenen Ansprüche,
wobei in wenigstens zwei axial benachbarten Profilbändern (1,2) derartige in Umfangsrichtung U beabstandete Abschnitte (6,6') mit jeweils in axialer Richtung nebeneinander angeordneten Feineinschnitten (8) ausgebildet sind, wobei die Abschnitte (6,6') der beiden Profilbänder (1,2) zueinander jeweils in Umfangsrichtung U - insbesondere ohne Überschneidung - versetzt zueinander positioniert sind.

4. Laufstreifenprofil gemäß den Merkmalen von einem oder mehreren der vorangegangenen Ansprüche,
wobei die axial nebeneinander angeordneten Feineinschnitte (8) jeweils mit einer - insbesondere gleich groß - ausgebildeten Länge L mit 3mm≤L≤8mm und mit einer - insbesondere gleich groß - ausgebildeten ausgebildeten Breite d mit 0,4mm≤d≤1mm ausgebildet sind.

5. Laufstreifenprofil gemäß den Merkmalen von einem oder mehreren der vorangegangenen Ansprüche,
wobei die axial benachbarten nebeneinander angeordneten Feineinschnitte (8) jeweils zumindest in der radial äußeren Oberfläche (9) mit einem - insbesondere gleich großen - Abstand a zueinander angeordnet sind mit 2mm≤a≤6mm.

6. Laufstreifenprofil gemäß den Merkmalen von einem oder mehreren der vorangegangenen Ansprüche,
wobei die in Umfangsrichtung U benachbarten hintereinander angeordneten mit axial nebeneinander angeordneten Feineinschnitten (8) ausgebildeten Abschnitte (6) eines radial erhabenen Profilbandabschnitts jeweils mit einem in Umfangsrichtung U gemessenen Abstand s zueinander angeordnet sind mit 15mm≤s≤25mm.

7. Laufstreifenprofil gemäß den Merkmalen von
wobei der Abschnitt (6) sich in Umfangsrichtung zwischen zwei quer zur Umfangsrichtung erstreckten Linien (l₁,l₂) erstreckt, wobei die axial nebeneinander angeordneten Feineinschnitte (8) eines Abschnittes (6) mit ihrem einen Erstreckungsende auf der einen (l₁) und mit ihrem anderen Erstreckungsende auf der anderen (l₂) Linie enden.

8. Laufstreifenprofil gemäß den Merkmalen von Anspruch 7,
wobei die beiden Linien (l₁,l₂) geradlinig (g₁,g₂), parallel zueinander und unter einem Neigungswinkel α zur Umfangsrichtung U verlaufend ausgebildet sind mit 45°<α<135° - insbesondere mit α=90°.

9. Laufstreifenprofil gemäß den Merkmalen von Anspruch 7,
wobei die beiden Linien (l₁,l₂) innerhalb der Bodenaufstandsbreite jeweils ausgehend von den beiden axialen Rändern des Profilbandes (2) in axialer Richtung zur Mitte hin mit zunehmendem Abstand zueinander ausgebildet sind.

10. Laufstreifenprofil gemäß den Merkmalen von einem oder mehreren der vorangegangenen Ansprüche,
wobei im Bereich der axialen Mitte des Profilbandes (2) wenigstens ein durch die Linien (l₁,l₂) begrenzter Feineinschnitt (8) aus zwei unmittelbar in Umfangsrichtung U hintereinander ausgebildeten unterbrochenen Teilfeineinschnitten (18,19) und zumindest die in axialer Richtung A beiderseits der Mitte äußeren Feineinschnitte (8) jeweils aus einem ununterbrochenen Feineinschnitt (8) ausgebildet sind.

11. Laufstreifenprofil gemäß den Merkmalen von einem oder mehreren der vorangegangenen Ansprüche,
wobei die Feineinschnitte (8) längs ihrer radialen Erstreckung nach innen mit einer abnehmenden Länge L ausgebildet sind.

12. Laufstreifenprofil gemäß den Merkmalen von einem oder mehreren der vorangegangenen Ansprüche,
wobei im Abschnitt (6) jeweils N Feineinschnitte (8) in axialer Richtung A nebeneinander ausgebildet sind mit 5 ≤ N ≤ 8.

## Claims

1. Tread profile of a pneumatic vehicle tyre with profile strips (1, 2) that are made to extend over the circumference of the pneumatic vehicle tyre and comprise a radially raised profile strip portion (1, 2) made to extend over the circumference of the pneumatic vehicle tyre or comprise a number of radially raised profile strip portions arranged one behind the other in the circumferential direction U of the pneumatic vehicle tyre and distributed over the circumference of the pneumatic vehicle tyre, the profile strips (1, 2) being spaced apart from one another in the axial direction A of the pneumatic vehicle tyre by circumferential grooves (3, 4, 5) made to extend over the circumference of the pneumatic vehicle tyre and being formed outwards in the radial direction R with a radially outer surface (9) forming the ground contact surface, the profile strip portion in at least one profile strip (2) being formed with portions (6) that are distributed along its circumferential extent, are spaced apart from one another in the circumferential direction U and respectively have a number of sipes (8) arranged next to one another in the axial direction A in the radially outer surface, the directional component of the main direction of extent of the sipes, formed in the circumferential direction U of the pneumatic vehicle tyre, being greater in each case than the directional component formed in the axial direction A,
**characterized**
**in that**, in a portion (6) formed with the sipes (8) arranged axially next to one another, in the radially outer surface (9) there is additionally formed a channel (10) that is made to extend - in particular in a straight line - transversely in relation to the profile strip (2) within the ground contact width of the pneumatic vehicle tyre over the entire width of the profile strip (2) and intersects the sipes (8) arranged axially next to one another, the channel (10) being formed with a depth t₁ formed in the radial direction R of the tyre that is at most half the depth t of the sipes.

2. Tread profile according to the features of Claim 1, the sipes (8) being formed so as to extend in a straight line - in particular in the circumferential direction U.

3. Tread profile according to the features of one or more of the preceding claims,
such portions (6, 6') that are spaced apart in the circumferential direction U and have sipes (8) respectively arranged next to one another in the axial direction being formed in at least two axially neighbouring profile strips (1, 2), the portions (6, 6') of the two profile strips (1, 2) being positioned in relation to one another respectively offset in relation to one another in the circumferential direction U - in particular without overlapping.

4. Tread profile according to the features of one or more of the preceding claims,
the sipes (8) arranged axially next to one another being respectively formed with a formed length L - in particular of equal size - where 3 mm ≤ L ≤ 8 mm and with a formed width d - in particular of equal size - where 0.4 mm ≤ d ≤ 1 mm.

5. Tread profile according to the features of one or more of the preceding claims,
the axially neighbouring sipes (8) arranged next to one another being respectively arranged in relation to one another, at least in the radially outer surface (9), with a spacing a - in particular of equal size - where 2 mm ≤ a ≤ 6 mm.

6. Tread profile according to the features of one or more of the preceding claims,
the portions (6) of a radially raised profile strip portion that are arranged as neighbouring one behind the other in the circumferential direction U and are formed with sipes (8) arranged axially next to one another being respectively arranged in relation to one another with a spacing s, measured in the circumferential direction U, where 15 mm ≤ s ≤ 25 mm.

7. Tread profile according to the features of one or more of the preceding claims,
the portion (6) extending in the circumferential direction between two lines (l₁, l₂) made to extend transversely in relation to the circumferential direction, the sipes (8) of a portion (6), arranged axially next to one another, ending with their one end of extent on one line (l₁) and with their other end of extent on the other line (l₂).

8. Tread profile according to the features of Claim 7, the two lines (l₁, l₂) being formed so as to run in a straight line (g₁, g₂), parallel to one another and at an angle of inclination α in relation to the circumferential direction U, where 45° < α < 135° - in particular where α = 90°.

9. Tread profile according to the features of Claim 7, the two lines (l₁, 12) being formed within the ground contact width with an increasing distance from one another towards the middle in the axial direction, respectively starting from the two axial peripheries of the profile strip (2).

10. Tread profile according to the features of one or more of the preceding claims,
in the region of the axial middle of the profile strip (2), at least one sipe (8) that is delimited by the lines (l₁, l₂) being formed by two interrupted sub-sipes (18, 19) formed directly one behind the other in the circumferential direction U and at least the outer sipes (8) on both sides of the middle in the axial direction A being respectively formed by an uninterrupted sipe (8).

11. Tread profile according to the features of one or more of the preceding claims,
the sipes (8) being formed with decreasing length L inwardly along their radial extent.

12. Tread profile according to the features of one or more of the preceding claims,
N sipes (8) being respectively formed next to one another in the axial direction A in the portion (6), where 5 ≤ N ≤ 8.

## Revendications

1. Profil de bande de roulement pour bandage pneumatique de roue de véhicule, présentant des bandes profilées (1, 2) qui s'étendent à la périphérie du bandage pneumatique pour roue de véhicule et qui sont constituées d'une partie (1, 2) de bande profilée en relief radial qui s'étend à la périphérie du bandage pneumatique pour roue de véhicule ou de plusieurs parties de bande profilée en relief radial disposées les unes derrière les autres dans la direction périphérique U du bandage pneumatique pour roue de véhicule et réparties à la périphérie du bandage pneumatique pour roue de véhicule,
les bandes profilées (1, 2) étant formées dans la direction axiale A du bandage pneumatique pour roue de véhicule par des rainures périphériques (3, 4, 5) qui s'étendent à la périphérie du bandage pneumatique pour roue de véhicule, situées à distance mutuelle et avec à l'extérieur, dans la direction radiale R, une surface radiale extérieure (9) formant la surface en contact avec le sol,
la partie de bande profilée étant formée dans au moins une bande profilée (2) de parties (6) réparties dans sa direction périphérique et situées à distance les unes des autres dans la direction périphérique U, avec chacune plusieurs fines entailles (8) disposées les unes derrière les autres dans la direction axiale A dans la surface radiale extérieure, la composante directionnelle de la direction d'extension principale des fines entailles dans la direction périphérique U du bandage pneumatique pour roue de véhicule étant plus grande que la composante directionnelle dans la direction axiale A,
**caractérisé en ce que**
dans la surface radiale extérieure (9) d'une partie (6) présentant les fines entailles (8) disposées axialement les unes derrière les autres, une rainure supplémentaire (10), en particulier rectiligne, s'étend transversalement par rapport à la bande profilée (2) à l'intérieur de la largeur d'appui au sol du bandage pneumatique pour roue de véhicule et sur toute la largeur de la bande profilée (2) et coupe les fines entailles (8) disposées les unes derrière les autres dans la direction axiale et
**en ce que** la profondeur t₁ de la rainure (10) dans la direction radiale R du bandage pour roue vaut au plus la moitié de la profondeur t des fines entailles.

2. Profil de bande de roulement selon les caractéristiques de la revendication 1, dans lequel les fines entailles (8) s'étendent en ligne droite, en particulier dans la direction périphérique U.

3. Profil de bande de roulement selon les caractéristiques d'une ou plusieurs des revendications précédentes, dans lequel dans au moins deux bandes profilées (1, 2) voisines axialement, les parties (6, 6') situées à distance les unes des autres dans la direction périphérique U présentent de fines entailles (8) disposées les unes à côté des autres dans la direction axiale, les parties (6, 6') des deux bandes profilées (1, 2) étant décalées les unes par rapport aux autres dans la direction périphérique U, en particulier sans recouvrement.

4. Profil de bande de roulement selon les caractéristiques d'une ou plusieurs des revendications précédentes, dans lequel les fines entailles (8) disposées axialement les unes à côté des autres présentent toutes une longueur L en particulier identique avec 3 mm ≤ L ≤ 8 mm et une largeur d, en particulier identique, avec 0,4 mm ≤ d ≤ 1 mm.

5. Profil de bande de roulement selon les caractéristiques d'une ou plusieurs des revendications précédentes, dans lequel au moins dans la surface radiale extérieure (9), les fines entailles (8) disposées axialement les unes à côté des autres sont disposées à une distance mutuelle a, en particulier identique, avec 2 mm ≤ a ≤ 6 mm.

6. Profil de bande de roulement selon les caractéristiques d'une ou plusieurs des revendications précédentes, dans lequel les parties (6) d'une partie de bande profilée en relief radial voisines dans la direction périphérique U, disposées les unes derrière les autres et formées avec des fines entailles (8) disposées axialement les unes à côté des autres, sont disposées à une distance mutuelle s mesurée dans la direction périphérique U, avec 15 mm ≤ s ≤ 25 mm.

7. Profil de bande de roulement selon les caractéristiques d'une ou plusieurs des revendications précédentes, dans lequel la partie (6) s'étend dans la direction périphérique entre deux lignes (l₁, l₂) qui s'étendent transversalement par rapport à la direction périphérique, les fines entailles (8) disposées axialement les unes derrière les autres d'une partie (6) se terminant avec une extrémité de leur extension sur une ligne (l₁) et par l'autre extrémité de leur extension sur l'autre ligne (l₂).

8. Profil de bande de roulement selon les caractéristiques de la revendication 7, dans lequel les deux lignes (l₁, l₂) s'étendent en ligne droite (g₁, g₂), parallèlement l'une à l'autre et sous un angle d'inclinaison α par rapport à la direction périphérique U, avec 45° < α < 135° et en particulier α = 90°.

9. Profil de bande de roulement selon les caractéristiques de la revendication 7, dans lequel les deux lignes (l₁, 12) s'étendent à l'intérieur de la largeur d'appui au sol, en partant des deux bords axiaux de la bande profilée (2) dans la direction axiale en direction du milieu avec une distance mutuelle croissante.

10. Profil de bande de roulement selon les caractéristiques d'une ou plusieurs des revendications précédentes, dans lequel au niveau du milieu axial de la bande profilée (2), au moins une fine entaille (8) limitée par les lignes (l₁, l₂) est formée de deux parties (18, 19) de fine entaille, interrompues et formées directement l'une derrière l'autre dans la direction périphérique U, au moins les fines entailles (8) extérieures situées des deux côtés du milieu dans la direction axiale A étant formées chacune d'une fine entaille (8) ininterrompue.

11. Profil de bande de roulement selon les caractéristiques d'une ou plusieurs des revendications précédentes, dans lequel les fines entailles (8) présentent dans leur extension radiale vers l'intérieur une longueur L décroissante.

12. Profil de bande de roulement selon les caractéristiques d'une ou plusieurs des revendications précédentes, dans lequel N fines entailles (8) avec 5 ≤ N ≤ 8 sont formées les unes à côté des autres dans la direction axiale A dans la partie (6).
